# EUROPEAN PATENT SPECIFICATION

(11) **EP 0 509 601 B1**
(45) Date of publication and mention of the grant of the patent: **11.01.1995**
(21) Application number: 92201054.1
(22) Date of filing: 14.04.1992
(51) Int. Cl.: C02F 3/12, C02F 3/28, C02F 1/38

(54) **Process for treating effluents resulting from yolky wool-scouring processes**
Verfahren für die Behandlung von Abwässern aus Wäschereien von fettiger Wolle
Procédé pour le traitement d'effluents provenant du lavage de la laine graisseuse

(30) Priority: 16.04.1991 IT MI911039
(43) Date of publication of application: 21.10.1992
(73) Proprietor: MANIFATTURA LANE G.Marzotto & FIGLI S.P.A., I-36078 Valdagno-Vicenza (IT)
(72) Inventor: Zanini, Giovanni, I-36078 Valdagno, Vicenza (IT)
(74) Representative: Fusina, Gerolamo

(56) References cited:
- GB-A- 1 597 473
- WORLD PATENTS INDEX LATEST Week 8839, Derwent Publications Ltd., London, GB; AN88-277018
- SEWAGE WORKS JOURNAL. vol. 21, no. 2, February 1949, WASHINGTON US pages 286 -293; M. T. SINGLETON: 'EXPERIMENTS ON ANAEROBIC DIGESTION OF WOOL SCOURINGWASTES'
- CHEMICAL ABSTRACTS, vol. 70, no. 16, 21 April 1969, Columbus, Ohio, US;abstract no. 70936D, OGAWA, HIROSHI ET AL: 'CHEMICAL AND BIOLOGICAL TREATMENTOF WOOL-SCOURING WASTE' page 210 ;column L ;

## Description

This invention relates to a process for treating effluents resulting from greasy wool scouring processes.

In the scouring of greasy wools, the liquid effluents are characterised by a very high content of contaminant substances, which substances can be degraded biologically or chemically. In this respect, their COD (chemical oxygen demand) and BOD 5 (biochemical oxygen demand for a time of five days) values exceed 30,000 mg/l and 10,000 mg/l respectively.

Optimum purification of such effluents to enable them to be disposed of and discharged as surface water is achieved only if the contaminant content can be reduced to a level which would make them suitable for any further use, for example to within the following limits:
COD < 160 mg/l
BOD 5 < 50 mg/l
In the known art the processes used for purifying such effluents consist generally of a multi-stage process comprising:
1) a first stage of biological break-down of all the biodegradable compounds, the biological break-down being aerobic or anaerobic;
2) a second stage of chemical break-down of all the chemically reactive substances;
3) a third stage of insolubilization of those contaminant compounds which can be precipitated, this insolubilization being achieved by precipitation or flocculation;
4) a fourth stage in which the precipitate obtained in stage 3) is separated from the supernatant liquid;
5) a fifth and final stage in which purification from the final contaminant residues able to be broken down is achieved.

The sequence of these stages is rigorously important, and in addition a very precise procedure is followed for each individual stage.

For example, the fourth stage in which the solid part is separated from the supernatant liquid must always follow the chemical treatment. This chemical treatment always follows the initial biological purification.

Moreover, a further objective of the fourth stage, ie that in which the solid is separated from the supernatant liquid, is maximum drying or dewatering of the solid part which is to form the so-called purification sludge.

World Patent Index AN-88-277 018, Derwent Publications Ltd. discloses a process for biochemical purification of effluents from primary wool treatment comprising an anaerobic oxidation, settling and an aerobic oxidation.

GB-A-1 597 473 describes a process for treating aqueous solutions containing lanolin comprising centrifuing the effluent to remove greases and then subjecting the aqueous solution to a treatment with acid and with a flocculating agent.

The drawbacks of the process as conducted in the prior art are numerous and important.

Firstly the basic stage, ie the separation of the solid from the supernatant liquid, is known to require an extremely long time.

This is because the decantation time required for separating the solid from the liquid is very long. In addition this stage is conducted in large steel or concrete tanks.

These tanks therefore represent a very high plant cost. In addition because of their very large dimensions they require considerable space.

A further drawback of currently known effluent purification processes is the quality and quantity of purification sludge which forms, this sludge not being suitable for further use as a secondary raw material.

Such sludge is therefore collected in suitable storage zones and eliminated.

The process is therefore very costly overall.

The object of the present invention is to obviate the aforesaid drawbacks.

This object is attained by an improved process for treating effluents from greasy wool scouring processes comprising a step of anaerobic treatment, a settling step and a step of aerobic treatment, characterized in that it consists of a first and principal step a) of flocculation/precipitation of the flocculable/precipitable contaminants and separation, by centrifuging, of the liquid phase from the solid phase, consisting of purification sludge, said step a) being then followed by said step b) of anaerobic treatment, said step c) of settling and said step d) of aerobic treatment.

The present invention is totally different from the prior art in that the stated succession of operations represents an ordered group of operations which is not only not taught as such by the known art but in fact contradicts it.

The technical characteristics and further advantages of the present invention will be more apparent from the illustrative description given hereinafter with reference to the following diagram.

Said diagram is a schematic representation of the succession of stages of the process according to the present invention. 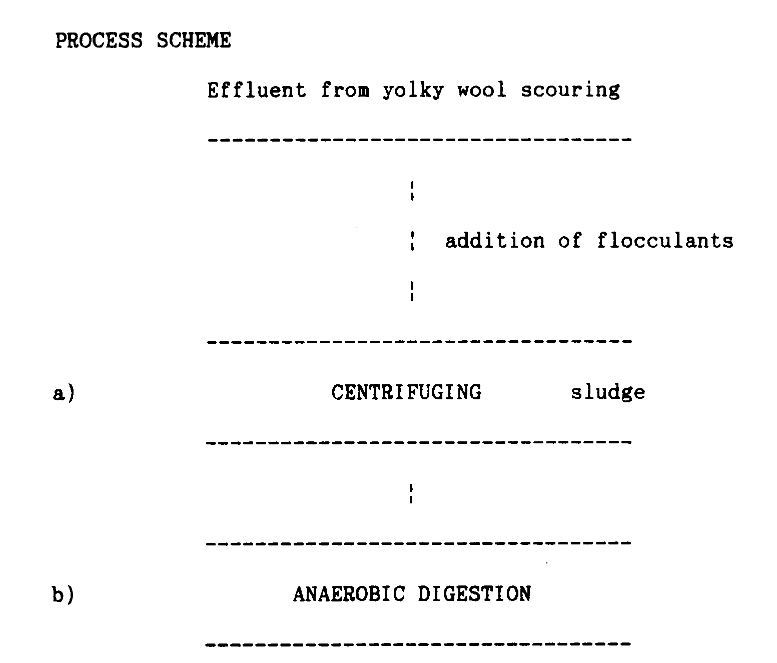 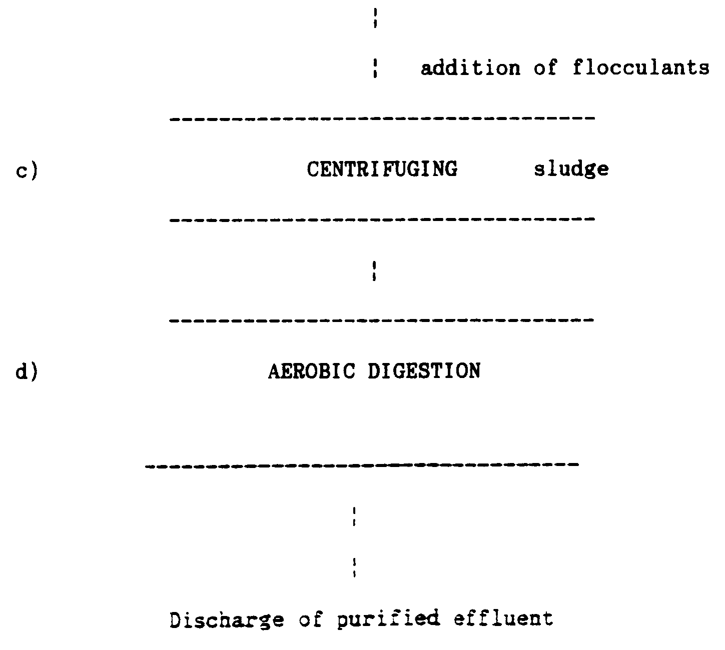
This diagram shows the stages which characterise the present invention, the effluent from greasy wool scouring being subjected specifically to:
a) a first stage in which, after adding flocculants, a centrifuging process is conducted to precipitate the solid substances, a first fraction of sludge therefore being produced;
b) a subsequent stage in which the substrate from stage a) undergoes anaerobic treatment;
c) a second flocculation/precipitation and separation stage in which, after adding flocculants, a further centrifuging process is conducted to separate a second fraction of sludge;
d) a final stage of aerobic treatment, from which purified effluent is obtained.

As can be seen from the described scheme, the present invention is based on the fact that the fundamental stage of the entire purification process for effluent from greasy wool scouring is the initial treatment with flocculant or precipitant substances.

There is therefore an immediate great contrast with the prior art, in which the considered fundamental stage is the initial chemical-biological break**-**down.

In addition, in the process of the present invention the precipitation/flocculation stage and the separation stage are conducted simultaneously to form a single stage.

As stated, in the prior art these two stages are sequential and require both a considerable time and large-dimension tanks, which in the present invention are totally eliminated.

The first stage a) comprising flocculation/precipitation and separation is effected using chemical flocculants/precipitants which are particularly effective both in terms of process rapidity and in terms of the required quantities, these being particularly low and hence minimizing the volumes in play.

Mechanical separation of the solids from the liquid is achieved in a very short time, with considerable efficiency in extracting the liquid phase, which in the present invention is water. This means that the quantity of purification sludge is minimized and can hence be transported more easily and in a state more suitable for its subsequent use.

In addition the choice of suitable flocculation/precipitation chemicals is such that not only is the final use of the sludge not compromised but in addition the sludge is of higher quality making it more suitable for re-use.

As can be seen from the preceding diagram, stage b) consists of biological degradation based on an anaerobic treatment process for effluents of medium organic content.

The treatment of stage b) is therefore such that it is also effective at low degradable material concentrations, ie under particular operating conditions.

In this respect, according to the present invention, the organic molecule breakdown derives from a process of high purification of effluent of medium-low organic content rather than a methane production process as in the case of the prior art.

This effluent, characterised by a medium-low organic content, would in fact be very difficult to purify by aerobic processes as such processes generally require a low COD/BOD ratio.

The biological-anaerobic purification stage is therefore strictly subordinate to the preceding precipitation/flocculation and separation stage, and effectively completes it.

Stage c) of the present invention repeats the same treatment as stage a), ie flocculation/precipitation, followed by separation by a mechanical solid/liquid procedure which further improves the quality of the purified water.

Again in stage c) the chemical compounds used for precipitation/flocculation must also be active under high dilution of the flocculable material.

Stage d) of she process is the final aerobic treatment. Such aerobic treatment is possible because as a result of the preceding treatments the effluent now has a low COD/BOD ratio, so allowing purification of the effluent from greasy wool scouring to be completed to provide purified effluent with a contaminant level acceptable under current law for discharge as surface water.

The four stages of an example of a process for purifying effluent from greasy wool scouring will now be considered in detail.

### a) Flocculation/precipitation and separation stage, and

### b) Anaerobic digestion stage

In the first stage the insoluble solids are precipitated and separated from the liquid simultaneously.

Specifically, this stage is conducted by feeding the effluent from the greasy wool scouring plants to a horizontal-axis centrifuge of decanter type.

The chemical reagents required for the flocculation are fed directly into the pipe prior to centrifuge entry.

The sludge obtained from this treatment has hence been mechanically dewatered and is automatically transferred by a screw conveyor to the storage area.

The liquid effluent from the centrifuge is fed to the anaerobic digester via a heat exchanger by which the temperature is maintained constant at about 35°C.

The average contaminant load of the effluent to be purified and which is fed to the first stage is as follows:

| | |
|---|---|
| COD | 32,000 mg/l |
| BOD 5 | 12,000 mg/l |
| Suspended solids | 14,000 mg/l |
| Oils and greases | 4,500 mg/l |

The operating conditions in this first stage are as follows:

| | |
|---|---|
| - purified water quantity: | up to 30 m³/hour |
| - quantity of reagents: | 0.1-0.5% on the purified water |
| - flocculants: | inorganic iron and chlorinated aluminium compounds |
| - flocculant concentration: | 5-25% |
| - pH of treated water: | 5-8 |
| - water temperature: | 35-50°C |
| - centrifuging speed: | > 2800 r.p.m. |
| - sludge quantity produced | 1-2 m³/hour |

The sludge produced during stage a) has the following characteristics:

| | |
|---|---|
| - water content of sludge as such: | 40-60% |
| - organic substances on dry basis: | 40-60% |
| - iron on dry basis: | 5-10% |
| - ash on dry basis: | 40-60% |
| - calorific value: | 1045-1881 kJ/kg (250-450 kcal/kg) as such |

The sludge obtained in this manner is mixed with clay in a ratio of between 1:4 and 1:2 and is then used as raw material for brick production.

In the anaerobic degradation stage b), which is conducted on the effluent from centrifuging, the operating conditions are as follows:

| | |
|---|---|
| - pH: | 7-8 |
| - digester temperature: | 35-40°C |
| - reaction time: | 3-10 days |
| - entry COD/BOD ratio: | 5-10 |

### c) Second flocculation/precipitation and separation stage, and

### d) Aerobic biological treatment

The effluent from the anaerobic digester is fed to a second centrifuge identical to that used in the first stage, where it is further centrifuged. The small amount of residual sludge is fed directly to storage.

The hence further purified and clarified liquid is fed to the last stage d) consisting of aerobic biological treatment.

The operating conditions of stage c) are as follows:

| | |
|---|---|
| - purified water quantity: | up to 30 m³/hour |
| - quantity of flocculable solids: | 1‰ - 1% |
| - flocculants: | inorganic iron and chlorinated aluminium compounds |
| - flocculant concentration: | 5-25% |
| - pH of treated water: | 7-8 |
| - centrifuging speed: | > 2800 r.p.m. |
| - COD/BOD ratio of treated water: | < 4 |

The operating conditions of the final stage d) are as follows:

| | |
|---|---|
| - liquid to be purified: | COD 1000-2000 mg/l |
| | BOD 200-600 mg/l |
| | pH 5-10 |
| - reaction time: | 1-5 days |
| - temperature: | ambient |
| - effluent characteristics: | COD 500 mg/l |
| | BOD 250 mg/l |
| | SS 200 mg/l |
| | oils 40 mg/l |
| | surfactants 4 mg/l |

The data relative to average contaminant load of effluent purified by treatment of the known art are compared with data relative to the average contaminant load of effluent treated by the process of the present invention in the following table.

**TABLE**

| | Treatment by known art | Treatment by present invention |
|---|---|---|
| COD mg/l | 1800 | 500 |
| BOD 5 mg/l | 600 | 250 |
| SUSPENDED SOLIDS mg/l | 250 | 200 |
| OILS AND GREASES mg/l | 100 | 40 |
| SURFACTANTS mg/l | 8 | 4 |

The advantages deriving from the aforedescribed process are apparent.

Firstly, in the present invention the tanks for solid/liquid decantation are totally eliminated with consequent cost and space advantages.

In addition the first flocculation/precipitation and separation stage a) is conducted using particularly effective flocculants and precipitants both in terms of process rapidity and in terms of required quantities, which are particularly low and hence enable the volumes in play to be minimized.

The use of a mechanical process for separating the solids from the liquid results in an extremely short process time and a considerable efficiency in extracting the liquid phase. This enables the quantity of purification sludge to be minimized and hence more easily transported, and in addition the sludge is more suitable for subsequent use. In addition the chemical flocculants and precipitants are chosen for high quality, making them more suitable for re-use.

A further advantage of the present invention is that the second stage b), consisting of biological degradation based on an anaerobic process for treating effluent of medium organic content, operates under treatment conditions which are also effective at low concentrations of biodegradable material, ie under particular operating conditions.

A further advantage of the process of the present invention is obtained in stage c), involving treatment identical to that of the first stage, ie flocculation/precipitation followed by separation by a mechanical solid/liquid process, which results in further improvement in the purified water quality. Again in this stage the chemical compounds used for precipitation/flocculation must also be active under high dilution of the flocculable material.

The fourth stage d) of the process, ie final aerobic treatment, is also particularly advantageous. This aerobic treatment now becomes possible because as a result of the preceding treatment the effluent has a low COD/BOD ratio, and enables the purification of the effluent from greasy wool scouring to be completed to obtain purified effluent characterised by a contaminant level acceptable under current law.

## Claims

1. A process for treating effluents from greasy wool scouring processes comprising a step of anaerobic treatment, a settling step and a step of aerobic treatment, characterized in that it consists of a first and principal step a) of flocculation/precipitation of the flocculable/precipitable contaminants and separation, by centrifuging, of the liquid phase from the solid phase, consisting of purification sludge, said step a) being then followed by said step b) of anaerobic treatment, said step c) of settling and said step d) of aerobic treatment.

2. A process according to claim 1, characterized in that said step c) of settling consists of a further flocculation /precipitation and separation by centrifuging.

3. A process according to claims 1 and 2, characterized in that the centrifuging is conducted with a horizontal -axis centrifuge of decanter type.

4. A process according to claim 1, characterized in that the purification sludge obtained from steps a) and c) is fed to storage areas by an automatic system.

5. A process according to claim 1, characterized in that the liquid effluent fed from stage a) to stage b) is maintained at a temperature of about 35°C by a heat exchanger.

6. A process according to claim 1, characterized in that the final step d) is conducted on a substrate having a low COD/BOD ratio.

7. A process according to claim 1, characterized in that the sludge obtained from the steps a) and c) is mixed with clay in a ratio varable from 1:4 to 1:2 for brick production.

## Patentansprüche

1. Verfahren zur Behandlung von Abwässern, die bei der Reinigung fettiger Wolle entstehen, bei dem eine anaerobische Behandlung ein Absetzschritt und ein aerobischer Behandlungsschritt Anwendung finden, **dadurch gekennzeichnet**, daß das Verfahren einen ersten und wesentlichen Schritt aufweist, nämlich a) eine Ausflockung/Abscheidung der ausflockbaren/abscheidbaren Schmutzstoffe und Trennung der flüssigen Phase von der aus Reinigungsschlamm bestehenden festen Phase durch Zentrifugieren, noch auf diesen Schritt a) der genannte b) der anaerobischen Behandlung, der genannte Schritt c) des Absetzens und der genannte Schritt d) der aerobischen Behandlung folgen.

2. Verfahren nach Anspruch 1, **dadurch gekennzeichnet**, daß der genannte Schritt c) des Absetzens aus einer weiteren Ausflockung/Abscheidung und Abtrennung durch Zentrifugieren besteht.

3. Verfahren nach den Ansprüchen 1 und 2, **dadurch gekennzeichnet**, daß das Zentrifugieren mit einer waagerecht gelagerten Zentrifuge des Dekantertyps durchgeführt wird.

4. Verfahren nach Anspruch 1, **dadurch gekennzeichnet**, daß der in den Stufen a) und c) erhaltene Reinigungsschlamm mit einem automatischen System zu einem Lagerbereich gefördert wird.

5. Verfahren nach Anspruch 1, **dadurch gekennzeichnet**, daß das in Stufe a) bis b) gelieferte Abwasser mit Hilfe eines Wärmeaustauschers auf einer Temperatur von etwa 35 °C gehalten wird.

6. Verfahren nach Anspruch 1, **dadurch gekennzeichnet**, daß die letzte Stufe d) auf einem Substrat durchgeführt wird, das ein niedriges COD/BOD-Verhältnis aufweist.

7. Verfahren nach Anspruch 1, **dadurch gekennzeichnet**, daß der in den Stufen a) und c) erhaltene Schlamm zur Ziegelherstellung in einem variablen Verhältnis von 1 : 4 bis 1 : 2 mit Lehm vermischt wird.

## Revendications

1. Procédé de traitement d'effluents à partir de procédés de lavage à fond de laine en suint, comprenant une étape de traitement anaérobie, une étape de séparation et une étape de traitement aérobie, caractérisé en ce qu'il est constitué d'une étape, placée en premier et principale, (a) de floculation/précipitation de contaminants susceptibles de floculer/précipiter et de séparation, par centrifugation, de la phase liquide à partir de la phase solide constituée de boue de décantation, ladite étape (a) étant ensuite suivie de ladite étape (b) de traitement anaérobie, de ladite étape (c) de séparation et de ladite étape (d) de traitement aérobie.

2. Procédé selon la revendication 1, caractérisé en ce que ladite étape (c) de séparation est constituée d'une floculation/précipitation et d'une séparation par centrifugation supplémentaires.

3. Procédé selon les revendications 1 et 2, caractérisé en ce qu'on réalise la centrifugation avec une centrifugeuse à axe horizontal de type appareil à décanter.

4. Procédé selon la revendication 1, caractérisé en ce que la boue de décantation obtenue à partir des étapes (a) et (c) est introduite dans des zones de stockage par un système automatique.

5. Procédé selon la revendication 1, caractérisé en ce qu'on maintient l'effluent liquide, introduit de l'étape (a) à l'étape (b), à une température d'environ 35°C par un échangeur thermique.

6. Procédé selon la revendication 1, caractérisé en ce qu'on réalise l'étape finale (d) sur un substrat ayant un rapport DCO/DBO faible.

7. Procédé selon la revendication 1, caractérisé en ce qu'on mélange la boue obtenue à partir des étapes (a) et (c) avec de l'argile en un rapport compris entre 1:4 et 1:2 pour une production de briques.
